# EUROPEAN PATENT SPECIFICATION

(11) **EP 3 290 803 B1**
(45) Date of publication and mention of the grant of the patent: **02.01.2019**
(21) Application number: 17188560.1
(22) Date of filing: 30.08.2017
(51) Int. Cl.: F23N 5/24

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(30) Priority: 31.08.2016 CN 201610797766
(43) Date of publication of application: 07.03.2018
(73) Proprietor: Siemens Schweiz AG, 8047 Zürich (CH)
(72) Inventor: Marbach, Kuno, 6020 Emmenbrücke (CH); Yin, Lu, Beijing (CN)
(74) Representative: Maier, Daniel Oliver

(56) References cited:
- DE-A1- 10 028 333
- DE-A1- 10 204 264
- DE-A1-102006 007 814
- DE-A1-102011 120 503
- DE-A1-102014 013 133

## Description

### Background

The instant disclosure generally relates to controllers for one or more spaces in a structure. More particularly, the disclosure relates to control devices and to methods for controlling fluid flow into and out of one or more spaces of a structure.

Structures such as industrial, residential, and / or commercial buildings frequently provide a number of control devices. These devices may, by way of non-limiting example, be employed to control a heating, ventilation, and air conditioning (HVAC) and / or to inhibit (fire) hazards. Control device such as HVAC controllers may also control fluid pressure inside the spaces (rooms) of a structure.

Control of air pressure is crucial in structures housing combustion appliances such as (open) fireplaces, water heaters, fossil fuel furnaces, wood and / or oil furnaces. A low pressure in a space may actually become a hazard if a combustion appliance is operated in the space. It is desirable to maintain a high pressure in spaces with combustion appliances in order to inhibit collections of (toxic and / or hazardous) gasses.

The presence of range hoods and / or kitchen hoods in a structure further exacerbates the issue of collections of gasses in a space. The blower of a range hood conveys air from the inside of a space to the outside thereby lowering the pressure inside the space. Through simultaneous operation of an open fireplace and of a range hood (toxic and / or hazardous) gasses can be conveyed from the fireplace into a room.

The patent application DE10028333A1 was filed on 5 June 2000. DE10028333A1 discloses a wireless safety device for attachment to a door or to a window. Upon opening the door or the window, the wireless safety device dispatches a signal. A receiver unit then employs a switch such as a triac and interrupts an electric current in response to the signal received from the safety device. The solution of DE10028333A1 is based on a signaling device attached to a door or to a window.

The German patent application DE10204264A1 was filed on 20 December 2001. DE10204264A1 discloses monitoring fireplaces by measurements of pressures in the fireplace and in the area surrounding the fireplace. The difference between the pressures measured inside and outside the fireplace is then determined. An alarm will be dispatched, if the pressure difference exceeds a threshold value. Also, a safety device such as a damper can be activated, if the pressure difference exceeds the threshold value. The system of DE10204264A1 requires a pressure sensor installed inside a fireplace.

The patent application DE102006007814A1 was filed on 17 February 2006. DE102006007814A1 discloses a structure with a conduit. The conduit is in fluid communication with the inside and with the outside of the structure. A damper installed inside the conduit can convey flow of air through the circuit or obturate the conduit. The damper will act as a valve and will close, if the pressure difference between the inside and the outside of the structure exceeds a threshold. DE102006007814A1 discloses a damper that operates in response to the mechanical forces generated by the pressure difference.

The German patent application DE102011120503A1 was filed on 7 December 2011. DE102011120503A1 teaches control of a range hood with simultaneous operation of a combustion appliance. Based on a signal from a temperature sensor a determination is made whether a fireplace is in service. If this determination is positive, a differential pressure between the inside and the surroundings of a fireplace will be determined. A range hood will deactivate if this pressure difference exceeds a value of 4 Pascals.

The present disclosure teaches pressure control that is not based on a sensor inside a combustion appliance. The instant disclosure focuses on tracking air flow into and out of a structure.

### Summary

The present disclosure provides a method and / or a device and / or a system for controlling pressure inside a structure. To that end, the structure provides a controller and an air intake conduit and / or an exhaust conduit. The controller and / or the system obtains readings of (reads) differential pressure from sensors installed in each conduit. The respective flows of air conveyed into and out of the structure are tracked based on these readings. The controller and / or the system are operable to adjust air flows through the conduits such that a high pressure inside the structure is maintained.

A range hood and a combustion appliance can thus operate simultaneously inside the same (space of a) structure. Collections of hazardous and / or toxic gases within a space of the structure are inhibited. The range hood may as well be a kitchen hood and the combustion appliance may as well be a fireplace. A sensor inside a combustion appliance is unessential for a method and / or a device and / or a system according to the instant disclosure.

The above objects are achieved by a method and / or by a device and / or by a system for control in accordance with the main claims of this disclosure. Preferred embodiments of the present disclosure are covered by the dependent claims.

It is an object of the present disclosure to provide a method and / or a device and / or a system for control wherein the air conveying capacity of a blower (disposed in a conduit) is controlled or regulated.

It is a related object of the present disclosure to provide a method and / or a device and / or a system for control wherein the air conveying capacity of a damper (disposed in a conduit together with a blower) is controlled or regulated.

It is yet an object of the present disclosure to provide a method and / or a device and / or a system for control wherein a target value can be entered for the pressure inside (a space of) a structure.

It is also an object of the present disclosure to provide a method and / or a device and / or a system for control wherein internal components of any blowers are lubricated.

It is also another object of the present disclosure to provide a method and / or a device and / or a system for control wherein particulate matter within a space of a structure is monitored.

It is a related object of the present disclosure to provide a method and / or a device and / or a system for control wherein particulate matter within a space of a structure is monitored and wherein an alarm will be triggered if a measure of particulate matter exceeds a threshold.

It is also a related object of the instant disclosure to provide a system of networked devices with a controller according to the instant disclosure.

It still is a related object of the instant disclosure to provide a commercial and / or industrial and / or residential building or facility with a controller and / or with a system according to the instant disclosure.

### Brief description of the drawings

Various features will become apparent to those skilled in the art from the following detailed description of the disclosed non-limiting embodiments. The drawings that accompany the detailed description can be briefly described as follows:
FIG 1 schematically depicts a structure with a space and a combustion appliance and a range hood installed in the space.
FIG 2 schematically depicts a structure with an intake conduit and with an exhaust conduit and with fluid movers installed in the conduits.
FIG 3 schematically shows a system for pressure control in a structure.

### Detailed decription

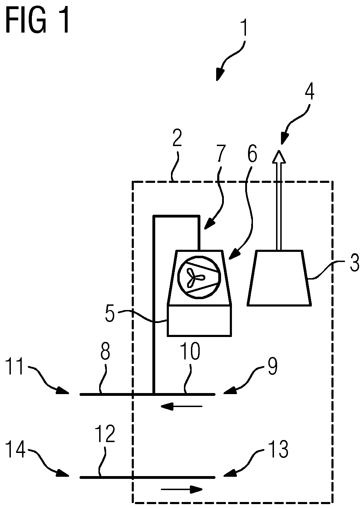

A structure 1 with a space 2 is shown on FIG 1. The structure 1 may, by way of non-limiting example, be a commercial and / or industrial and / or residential building or facility. The structure comprises a space 2 such as a room inside a building.

A combustion appliance 3 is disposed inside space 2. The combustion appliance 3 may be a fireplace, a gas burner, an oil burner, a fossil fuel furnace, a wood and / or oil furnaces. This list is not exhaustive.

A chimney 4 leads from the burner area of the combustion appliance 3 to the outside of the structure 1. The chimney 4 acts as an exhaust conduit and conveys a fluid such as air and / or smoke and / or toxic and / or hazardous gasses out of the structure 1. The outlet of the chimney 4 is typically disposed on the roof of structure 1.

A range hood 5 is also arranged inside the space 2. The range hood 5 can as well be a kitchen hood. Also, the range hood 5 can be a fume hood for use in a (chemical) laboratory.

FIG 1 shows a blower 6 disposed inside the range hood 5. In an embodiment, the blower 6 is a fan driven by an electric motor. In a particular embodiment, the electric motor is supplied with a pulse-width-modulated electric current and the pulse-width-modulated current determines the speed of the fan. In an alternate embodiment, the electric motor connects to an inverter and the inverter determines the speed of the fan. It is envisaged that an operator can control the fluid conveying capacity of the blower via the electric supply signal of the electric motor.

In yet another embodiment, the range hood 5 comprises a blower 6 and a damper. The blower 6 operates at constant rotational speed. Fluid flow is controlled or regulated by setting the position of the damper.

It is also envisaged that the range hood 5 comprises a damper and no blower 6. It is further envisaged that the range hood 5 comprises no damper and no blower 6.

The range hood 5 connects to an exhaust conduit 7. A fluid is conveyed from the inside of space 2 through the range hood 5 and the conduit 7. The fluid may, by way of non-limiting example, be air.

FIG 1 shows that a first end of the exhaust conduit 7 connects to the range hood 5. A second end of the exhaust conduit 7 connects to the main exhaust conduit 8. The main exhaust conduit 8 is operable to convey air from the inside of space 2 to the outside of space 2. To that end, the main exhaust conduit 8 provides a first inlet 9 inside space 2. The main exhaust conduit 8 also provides a second inlet 10 connected to the range hood exhaust conduit 8. A fluid can be conveyed from conduit 7 into conduit 9 at the T-intersection corresponding to inlet 10. The outlet 11 of the main exhaust conduit 8 is arranged outside space 2 and preferably also outside structure 1.

The structure 1 also provides an intake conduit 12. The intake conduit 12 functions to convey a fluid such as (fresh) air into space 2. To that end, intake conduit 12 provides an outlet disposed inside space 2. The inlet 14 of conduit 12 is disposed outside space 2 and preferably also outside structure 1.

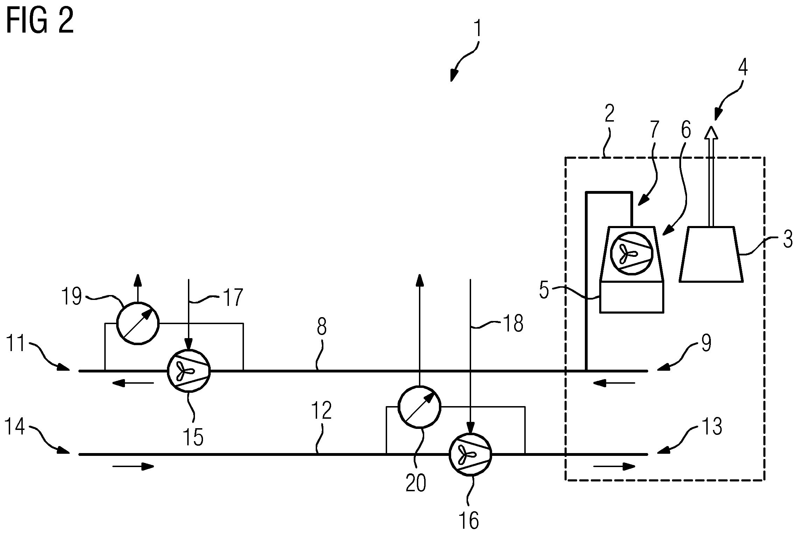

Referring now to FIG 2, a schematic is provided that illustrates how fluids are conveyed into and out of the space 2. The schematic of FIG 2 shows the main exhaust conduit 8 and the intake conduit 12 with fluid movers 15, 16 installed in these conduits 8, 12. It is envisaged that the fluid movers 15, 16 move gaseous fluids such as air.

In an embodiment, the fluid mover 15 comprises a blower. The blower 15 advantageously connects to an electric motor via a shaft. In a particular embodiment, the electric motor is supplied with a pulse-width-modulated electric current via a connector 17. The pulse-width-modulated current determines the speed of blower 15. In an alternate embodiment, the electric motor connects to an inverter via a connector 17. The inverter determines the speed of blower 15. It is envisaged that an operator can control the fluid conveying capacity through conduit 8 via the electric supply signal of the electric motor.

In yet another embodiment, a blower 15 and a damper are arranged in conduit 8. The blower 15 operates at constant speed. Fluid flow is controlled or regulated by setting the position of the damper. According to an aspect, a stepper motor sets the position of the damper in response to a signal provided through connector 17.

According to an embodiment, the fluid mover 15 is installed outside space (room) 2 and inside structure 1. According to an alternate embodiment, the fluid mover 15 is installed inside space 2 of structure 1.

In an embodiment, the fluid mover 16 comprises a blower. The blower 16 advantageously connects to an electric motor via a shaft. In a particular embodiment, the electric motor is supplied with a pulse-width-modulated electric current via a connector 18. The pulse-width-modulated current determines the speed of blower 16. In an alternate embodiment, the electric motor connects to an inverter via a connector 18. The inverter determines the rotational speed of the blower 16. It is envisaged that an operator can control the fluid conveying capacity through conduit 12 via the electric supply signal of the electric motor.

In yet another embodiment, a blower 16 and a damper are arranged in conduit 12. The blower 16 operates at constant speed. Fluid flow is controlled or regulated by setting the position of the damper. According to an aspect, a stepper motor sets the position of the damper in response to a signal provided through connector 18.

In an embodiment, the fluid mover 16 is installed outside space (room) 2 and inside structure 1. According to an alternate embodiment, the fluid mover 16 is installed inside space 2 of structure 1.

The schematic of FIG 2 depicts a flow measurement device 19. The flow measurement device 19 is disposed inside or near the main exhaust conduit 8. The flow measurement device 19 delivers a signal indicative of the mass or volume flow of a fluid through conduit 8.

In an embodiment, the flow measurement device 19 comprises a differential pressure sensor. The differential pressure sensor 19 is advantageously arranged in a conduit that bypasses fluid mover 15. It is envisaged that the measurement device 19 is a cantilevered-beam type sensor, wherein a differential pressure deflects a cantilevered beam. A piezoelectric device is employed to derive an electric output signal from the strain inside the cantilevered beam. According to another embodiment, the differential pressure sensor 19 is arranged (at a suitable position) inside the main exhaust conduit 8.

In another embodiment, the flow measurement device 19 comprises a mass flow sensor. The mass flow sensor 19 is advantageously installed at a suitable position inside the main exhaust conduit 8. Mass flow sensors suitable for the purposes declared herein can be type OMRON® D6F-W or type SENSOR TECHNICS® WBA sensors. This list is not exhaustive. The useful range of these sensors typically starts at any of the velocities between 0.01 m/s and 0.1 m/s and ends at any of the velocities of 5 m/s, 10 m/s, 15 m/s, 20 m/s, or even 100 m/s. That is, lower limits of 0.1 m/s can be combined with any of the upper limits of 5 m/s, 10 m/s, 15 m/s, 20 m/s, or even 100 m/s.

According to an aspect, the electric output signal of the (mass flow or differential pressure) sensor is converted into a digital representation. To that end, the skilled person connects the sensor to an analog-to-digital converter with suitable resolution and frequency.

In an embodiment, the flow measurement device 19 is installed outside space (room) 2 and inside structure 1. According to an alternate embodiment, the flow measurement device 19 is installed inside space 2 of structure 1. The flow measurement device 19 is advantageously installed at or near the fluid mover 15.

The schematic of FIG 2 depicts another flow measurement device 20. The flow measurement device 20 is disposed inside or near intake conduit 12. The flow measurement device 20 delivers a signal indicative of the mass or volume flow of a fluid through conduit 12.

In an embodiment, the flow measurement device 20 comprises a differential pressure sensor. The differential pressure sensor 20 is advantageously arranged in a conduit that bypasses fluid mover 16. It is envisaged that the measurement device 20 is a cantilevered-beam type sensor, wherein a differential pressure deflects a cantilevered beam. A piezoelectric device is employed to derive an electric output signal from the strain inside the cantilevered beam. According to another embodiment, the differential pressure sensor 20 is arranged (at a suitable position) inside intake conduit 12.

In another embodiment, the flow measurement device 20 comprises a mass flow sensor. The mass flow sensor 20 is advantageously installed at a suitable position inside the intake conduit 12. Mass flow sensors suitable for the purposes declared herein can be type OMRON® D6F-W or type SENSOR TECHNICS® WBA sensors. This list is not exhaustive. The useful range of these sensors typically starts at any of the velocities between 0.01 m/s and 0.1 m/s and ends at any of the velocities of 5 m/s, 10 m/s, 16 m/s, 20 m/s, or even 100 m/s. That is, lower limits of 0.1 m/s can be combined with any of the upper limits of 5 m/s, 10 m/s, 16 m/s, 20 m/s, or even 100 m/s.

According to an aspect, the electric output signal of the (mass flow or differential pressure) sensor is converted into a digital representation. To that end, the skilled person connects the sensor to an analog-to-digital converter with suitable resolution and frequency.

In an embodiment, the flow measurement device 20 is installed outside space (room) 2 and inside structure 1. According to an alternate embodiment, the flow measurement device 20 is installed inside space 2 of structure 1. The flow measurement device 20 is advantageously installed at or near the fluid mover 16.

According to another embodiment, the flow measurement device (flow meter) 20 indicates the speed (revolutions per minute) of a blower.

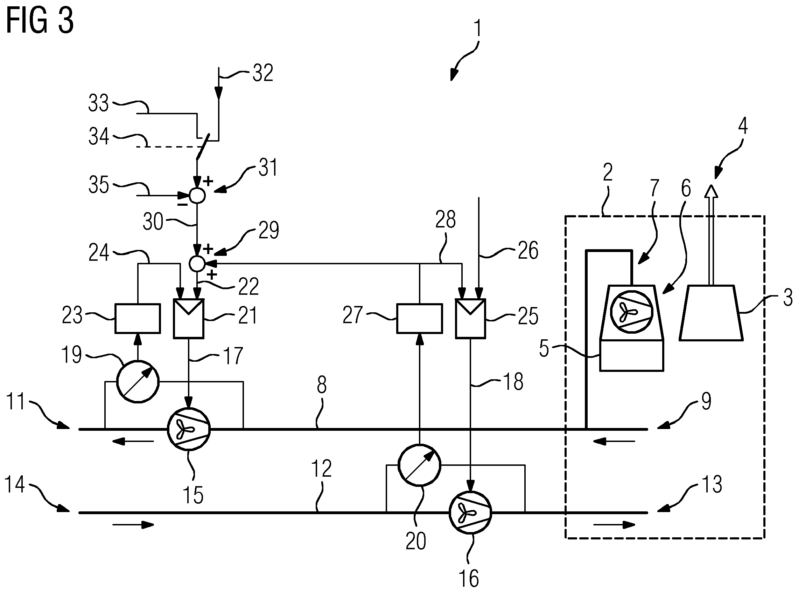

Referring now to FIG 3, details of a system for pressure control in a structure are given. A control module 21 connects to fluid mover 15 via connection 17. The control module 21 functions to control or regulate the amount of fluid conveyed by fluid mover 15. In an embodiment, the control module 21 sends a pulse-width-modulated signal to control or to regulate the fluid conveying capacity of the fluid mover 15. In another embodiment, the control module 21 comprises an inverter. The inverter of the control module 21 generates an electric signal and the frequency of the electric signal corresponds to the fluid conveying capacity of fluid mover 15.

The control module 21 receives a set point signal for the air conveying capacity of fluid mover 15 via input 22. In regulation mode, the control module 21 comprises a lookup table and / or a characteristic curve. The control module 21 generates a pulse-width-modulated signal or an inverter signal based on the lookup table or the characteristic curve. A pressure control system with a control module 21 in regulation mode may actually dispense with flow measurement device 19.

In control mode, the control module 21 also receives a signal from flow measurement device 19. It is envisaged that a signal from flow measurement device 19 is processed in processing module 23. According to an aspect, the processing module 23 comprises an impedance changer and / or an analog-to-digital converter. The processed signal is then led to control module 21 via input 24. According to an aspect, the signal from flow measurement device 19 is directly led to control module 21.

The control module 21 is operable to receive a set point signal via input 22 and an actual value indicative of fluid flow through conduit 8 via input 24. In an embodiment, control module 21 performs proportional, integral (and derivative) PI(D) control to match actual fluid flow and the set point value. It is envisaged that control module 21 implements a self-adaptive algorithm to adjust the parameters of the PI(D) algorithm. It is also envisaged that control module 21 provides a fuzzy logic algorithm to match actual fluid flow and the set point value.

A control module 25 connects to fluid mover 16 via connection 18. The control module 25 functions to control or regulate the amount of fluid conveyed by fluid mover 16. In an embodiment, the control module 25 sends a pulse-width-modulated signal to control or to regulate the fluid conveying capacity of the fluid mover 16. In another embodiment, the control module 25 comprises an inverter. The inverter of the control module 25 generates an electric signal and the frequency of the electric signal corresponds to the fluid conveying capacity of fluid mover 16.

The control module 25 receives a set point signal for the air conveying capacity of fluid mover 16 via input 26. In regulation mode, the control module 25 comprises a lookup table and / or a characteristic curve. The control module 25 generates a pulse-width-modulated signal or an inverter signal based on the lookup table and / or on the characteristic curve. A pressure control system with a control module 25 in regulation mode may actually dispense with flow measurement device 20.

In control mode, the control module 25 also receives a signal from flow measurement device 20. It is envisaged that a signal from flow measurement device 20 is processed in processing module 27. According to an aspect, the processing module 27 comprises an impedance changer and / or an analog-to-digital converter. The processed signal is then led to control module 25 via input 28. According to an aspect, the signal from flow measurement device 20 is directly led to control module 25.

The control module 25 is operable to receive a set point signal via input 26 and an actual value indicative of fluid flow through intake conduit 12 via input 28. In an embodiment, control module 25 performs proportional, integral (and derivative) PI(D) control to match actual fluid flow and the set point value. It is envisaged that control module 25 implements a self-adaptive algorithm to adjust the parameters of the PI(D) algorithm. It is also envisaged that control module 25 provides a fuzzy logic algorithm to match actual fluid flow and the set point value.

Calculation unit 29 determines the set point value for control unit 21. The set point value is forwarded by calculation unit 29 to control unit 21 via connection 22. Calculation unit 29 receives two inputs. The first input is provided along connection 28 and is indicative of fluid flow through intake conduit 12. The signal along connection 28 can be derived from the signal provided by flow measurement device 20. The signal along connection 28 can also be derived from a signal provided by control unit 21. In an embodiment, control unit 21 (in regulation mode) configures input 28 as an output. Control unit 21 then sends the current set point for fluid flow through conduit 12 to calculation unit 29 via connection 28.

The second input is provided along connection 30 and is a flow tracking value. The flow tracking value represents the balance of flows into and out of space 2 through the conduits 8 and 12. The flow tracking value needs not be zero due to fluid (air) leakage into and out of space 2. Chimney 4 shown on FIG 1 is an obvious cause of leakage.

The flow value through conduit 12 represents flow toward space 2. Calculation unit 29 sums up the air flow tracking value from connection 30 and the flow value through conduit 12 as provided along connection 28. The result is indicative of the flow that should leave space 2 via conduit 8 given the flow into space 2 via intake conduit 12.

The flow through intake conduit 12 may, by way of non-limiting example, be 1500 cubic meters per hour. The same value is forwarded via connection 28 to calculation unit 29. Let the flow tracking value be 100 cubic meters per hour. This value enters the calculation unit 29 through input 30. The calculation unit 29 then adds up these values and sends a set point value of 1600 cubic meters per hour to control unit 21 via connection 22. The flow tracking value of 100 cubic meters per hour of the present example entails an outward flow through conduit 8 which exceeds the intake flow through conduit 12. A flow tracking value of 100 cubic meters per hour thus yields a low pressure in space 2.

The flow through intake conduit 12 may, by way of another non-limiting example, also be 1500 cubic meters per hour. The same value is forwarded via connection 28 to calculation unit 29. Let the flow tracking value be -100 cubic meters per hour. This value enters the calculation unit 29 through input 30. The calculation unit 29 then adds up these values and sends a set point value of 1400 cubic meters per hour to control unit 21 via connection 22. The flow tracking value of - 100 cubic meters per hour of the present example entails an outward flow which is less than the intake. A flow tracking value of -100 cubic meters per hour thus yields a high pressure in space 2.

In the context of this disclosure, a high pressure inside space 2 is a fluid (air) pressure inside space 2 that exceeds the (ambient) fluid (air) pressure outside of structure 1. A low pressure inside space 2 is a fluid (air) pressure inside space 2 that is less than the (ambient) fluid (air) pressure outside of structure 1.

The flow tracking value is provided by a configuration unit 31 via connection 30. Configuration unit 31 reads a first input 32 indicative of a pressure mode (in a space 2). The pressure mode is selected from neutral, positive, or negative. A positive pressure mode indicates a high pressure in space 2. That is, a positive pressure mode indicates a fluid (air) pressure in space 2 which exceeds a fluid (air) pressure in an area surrounding structure 1. Likewise, a negative pressure mode indicates a low pressure in space 2. That is, a negative pressure mode indicates a fluid (air) pressure in space 2 which is less than a fluid (air) pressure in an area surrounding structure 1.

In an embodiment, the configuration unit 31 receives a signal such as -1 as an indication of negative pressure mode. A signal such as 0 indicates neutral pressure mode and a signal such as +1 indicates of positive pressure mode. The configuration unit 31 then relies on a lookup table and / or on a characteristic curve to map a positive pressure mode to a flow value such as -100 cubic meters per hour. Likewise, a negative pressure mode is mapped to a flow value such as +100 cubic meters per hour. A neutral pressure mode is mapped to a flow value such as 0 cubic meters per hour.

According to another embodiment, configuration unit 31 reads an analog or a digital value indicative of an amount of fluid flow. This particular embodiment does not rely on a lookup table and / or on a characteristic curve to map pressure modes to flow values. In the above example, the configuration unit 31 reads a flow value such as -100 cubic meters per hour when a positive pressure mode is desired. Likewise, the configuration unit 31 reads a flow value such as 100 cubic meters per hour when a negative pressure mode is desired. The configuration unit 31 reads a flow value such as 0 cubic meters per hour when a neutral pressure mode is desired.

Configuration unit 31 reads a second input 33 indicative of a request to reduce blower speed due to a combustion appliance. In an embodiment, configuration unit 31 interprets an input value such as +1 as a request to reduce outward flow through conduit 8. Configuration unit 31 then relies on a lookup table and / or on a characteristic curve to map the value of the second input 33 to a flow value of -100 cubic meters per hour. In another embodiment, configuration unit 31 reads an analog or a digital value representing a decrease in outward flow. Configuration unit 31 may, by way of non-limiting example, read a value such as -100 cubic meters per hour from input 33.

Configuration unit 31 reads a third input 34 indicative of a request for a combustion appliance such as a fireplace. FIG 3 shows that configuration unit 31 provides a switch. If the third input 34 of configuration unit 31 indicates that a combustion appliance operates, the switch will be set to forward the signal along input 33. If the third input 34 indicates no combustion appliance in operation, the switch will be set to forward the signal along input 32. If other words, the switch of configuration unit 31 provides safety functionality. A negative pressure mode signal from input 32 will be disregarded, if input 34 indicates a combustion appliance in operation.

The aforementioned switch can be implemented in software and / or in hardware. A software implementation may, by way of non-limiting example, rely on programmable logic. A hardware implementation may employ (field effect or bipolar) transistors and / or conventional relays. This list is not exhaustive. According to an aspect, the switch is implemented in a technically redundant arrangement. It is envisaged that configuration unit 31 provides a first switch and a second switch. If the configuration unit 31 detects that one of the switches is faulted, the other switch will be enabled.

Configuration unit 31 reads a fourth input 35 indicative of a range hood in operation. In an embodiment, configuration unit 31 interprets an input value such as +1 as a range hood in operation. An input value such as 0 is interpreted as no operating range hood. Configuration unit 31 then relies on a lookup table and / or on a characteristic curve to map the value such as +1 of the fourth input 35 to a flow value of 50 cubic meters per hour. In another embodiment, configuration unit 31 reads an analog or a digital value representing a request for compensation due to a range hood. Configuration unit 31 may, by way of non-limiting example, read a value such as 50 cubic meters per hour from input 35.

Configuration unit 31 finally calculates the difference between the output of the aforementioned switch and input 35. The result is forwarded as the flow tracking signal to calculation unit 29 along connection 30. In an exemplary embodiment, the switch is set to forward input 34. A flow value (value of fluid flow) such as -100 cubic meters per hour is then forwarded. Configuration unit 31 also reads a value such as 50 cubic meters per second from range hood compensation input 35. The difference between these input values is -150 cubic meters per second. The present example entails a value of -150 cubic meters per second that is determined by configuration unit 31.

According to an aspect, input 34 of the configuration unit 31 connects to a (temperature, infrared) sensor indicative of the status of a combustion appliance 3. The skilled person chooses a suitable bus such as BACNET, KNX, twisted pair etc and a suitable protocol to connect the sensor to input 34. The skilled person also chooses a suitable signal processor to convert the sensor signal into an analog or digital representation that is transmitted via the bus.

According to an aspect, input 35 of the configuration unit 31 connects to a (speed) sensor indicative of the status of (a blower 6 of) a range hood 5. The skilled person chooses a suitable bus such as BACNET, KNX, twisted pair etc and a suitable protocol to connect the sensor to input 35. The skilled person also chooses a suitable signal processor to convert the sensor signal into an analog or digital representation that is transmitted via the bus.

It is envisaged that configuration unit 31 provides a (touch screen) display and a graphical user interface. An operator may set a pressure mode and / or (numerical) value indicative of reduced flow due to a combustion appliance. These values are then applied to their corresponding inputs of configuration unit 31.

The instant disclosure describes pressure control in relation to an intake conduit 12 with a flow measurement device 20 and an exhaust conduit 8 with a fluid mover 16. Signals are received indicative of fluid flow in conduit 12. The flow through exhaust conduit 8 is controlled accordingly. In an alternate embodiment, signals are received indicative of fluid flow in exhaust conduit 8. The flow through intake conduit 12 is controlled accordingly.

It is also envisaged to implement the aforementioned method and / or device and / or system in a way that allows lubrication of the internal components of the blowers and / or dampers of an installation. Lubrication is advantageously achieved through intermittent operation of the blowers and / or fans arranged in the intake conduit 12 and / or in the exhaust conduit 8.

It is still envisaged to add a sensor for particulate matter (sized 2.5 micrometers and / or 10 micrometers) to the aforementioned method and / or device and / or system. The particulate matter sensor is typically disposed in the exhaust conduit 8 and / or inside the space 2. The particulate matter sensor connects to a controller. The controller employs the signal of the sensor and monitors particulate matter. The controller triggers an alarm in the event that a measure of particulate matter exceeds a threshold. In a particular embodiment, the same controller monitors particulate matter and implements the aforementioned method for pressure control.

In other words, the instant disclosure teaches a method for controlling pressure in at least a space 2 of a structure 1, the structure 1 comprising a combustion appliance 3 with a combustion indicator operable to indicate operation of the combustion appliance 3, at least a first conduit 8; 12 with a flow meter 20, 27, 16, 25; 19, 23, 15, 21 operable to indicate fluid flow through the at least a first conduit 8; 12 and at least a second conduit 12; 8 with a fluid mover 15, 21; 16, 25 operable to control or to regulate fluid flow through the at least a second conduit 12; 8, each conduit 8, 12 being in fluid communication with the at least a space 2, the method comprising the steps of:
- reading a first value 28 of fluid flow through the at least a first conduit 8; 12 from the flow meter 20, 27, 16, 25; 19, 23, 15, 21,
- reading from the combustion indicator a combustion indication signal 34 indicative of whether the combustion appliance 3 is in operation,
- reading a pressure mode signal 32 indicative of a target value of a pressure in the at least a space 2 and determining a flow tracking value 30 as a function of the pressure mode signal 32, if the combustion indication signal 34 indicates the combustion appliance 3 is not in operation,
reading a high pressure signal 33 indicative of a request for a high pressure in the at least a space 2 and determining a flow tracking value 30 as a function of the high pressure signal 33, if the combustion indication signal 34 indicates the combustion appliance 3 is in operation,
adding the first measure of fluid flow 28 and the flow tracking value 30 to generate a second value 22 of fluid flow, controlling or regulating fluid flow through the at least a second conduit 12; 8 via the fluid mover 15, 21; 16, 25 based on the generated second value 22 of fluid flow.

The instant disclosure also teaches the aforementioned method, wherein the structure 1 additionally comprises a range hood 6 with a flow indicator operable to indicate operation of the range hood 6, the method further comprising the steps of:
- reading from the flow indicator of the range hood 6 a range hood signal 35 indicative of whether the range hood 6 is in operation,
- generating a third value of fluid flow indicative of fluid flow through the range hood 6 from the range hood signal 35,
lowering the flow tracking value 30 by the generated third value of fluid flow.

The instant disclosure also teaches one of the aforementioned methods, wherein the structure 1 additionally comprises a range hood 6 with a flow meter operable to indicate fluid flow through the range hood 6, the method further comprising the steps of:
reading from the flow meter of the range hood 6 a fourth value of fluid flow 35 indicative of fluid flow through the range hood 6,
lowering the flow tracking value 30 by the fourth value of fluid flow obtained from the flow meter of the range hood 6.

In an embodiment, flow meter indicates fluid flow through the range hood 6 by indication of the speed (revolutions per minute) of a blower (in the range hood 6).

The instant disclosure also teaches one of the aforementioned methods, the method comprising the step of
determining the flow tracking value 30 exclusively as a function of the value of fluid flow indicative of fluid flow through the range hood 6 and of the high pressure signal 33 indicative of a request for high pressure in the at least a space 2, if the combustion indication signal 34 indicates the combustion appliance 3 is in operation.

The instant disclosure also teaches one of the aforementioned methods, the method comprising the step of disabling a pressure mode signal 32 indicative of a target value of a pressure in the at least a space 2 if the combustion indication signal 34 indicates the combustion appliance 3 is in operation.

The instant disclosure also teaches one of the aforementioned methods, the method comprising the step of
- reading a pressure mode signal 32 indicative of a target value of a pressure in the at least a space 2 and determining a flow tracking value 30 as a function of the pressure mode signal 32, if the combustion indication signal 34 indicates the combustion appliance 3 is not in operation, wherein determining the flow tracking value 30 involves mapping a pressure mode signal 32 to a flow tracking value 30 via a lookup table and / or via a characteristic curve.

The instant disclosure also teaches one of the aforementioned methods, the method comprising the step of
- reading a pressure mode signal 32 indicative of a target value of a pressure in the at least a space 2 and determining a flow tracking value 30 as a function of the pressure mode signal 32, if the combustion indication signal 34 indicates the combustion appliance 3 is not in operation,
wherein determining the flow tracking value 30 involves mapping a pressure mode signal 32 to a flow tracking value 30 via a linear relationship.

The instant disclosure also teaches one of the aforementioned methods, the method comprising the step of
generating athird value of fluid flow indicative of fluid flow through the range hood 6 from the range hood signal 35, wherein generating the third value of fluid flow indicative of fluid flow through the range hood 6 involves mapping a range hood signal 35 to a value of fluid flow via a lookup table and / or via a characteristic curve.

The instant disclosure also teaches one of the aforementioned methods, the method comprising the step of generating a third value of fluid flow indicative of fluid flow through the range hood 6 from the range hood signal 35, wherein generating the third value of fluid flow indicative of fluid flow through the range hood 6 involves mapping a range hood signal 35 to a value of fluid flow via a linear relationship.

The instant disclosure also teaches one of the aforementioned methods, wherein a negative flow tracking value 30 indicates a high pressure inside the structure 2).

The instant disclosure also teaches one of the aforementioned methods, wherein a positive flow tracking value 30 indicates a high pressure inside the structure 2).

The instant disclosure also teaches a non-transitory, tangible computer readable medium having instructions executable by a processor for performing one of the aforementioned methods when said instructions are executed.

The instant disclosure also teaches a control device for controlling pressure in at least a space 2 of a structure 1, the structure 1 comprising a combustion appliance 3 with a combustion indicator operable to indicate operation of the combustion appliance 3, at least a first conduit 8; 12 with a flow meter 20, 27, 16, 25; 19, 23, 15, 21 operable to indicate fluid flow through the at least a first conduit 8; 12 and at least a second conduit 12; 8 with a fluid mover 15, 21; 16, 25 operable to control or to regulate fluid flow through the at least a second conduit 12; 8, each conduit 8, 12 being in fluid communication with the at least a space 2, the control device comprising:
- a first input channel for reading a first value 28 of fluid flow through the at least a first conduit 8; 12 from the flow meter 20, 27, 16, 25; 19, 23, 15, 21,
- a second input channel for reading from the combustion indicator a combustion indication signal 34 indicative of whether the combustion appliance 3 is in operation,
- a third input channel for reading a pressure mode signal 32 indicative of a target value of a pressure in the at least a space 2,
- a fourth input channel for reading a high pressure signal 33 indicative of a request for a high pressure in the at least a space 2,
- an output channel for controlling or regulating the fluid mover 15, 21; 16, 25 arranged in the at least a second conduit 12; 8,
- a processor configured to determine a flow tracking value 30 as a function of the pressure mode signal 32, if the combustion indication signal 34 indicates the combustion appliance 3 is not in operation,
- the processor also being configured to determine a flow tracking value 30 as a function of the high pressure signal 33, if the combustion indication signal 34 indicates the combustion appliance 3 is in operation,
- the processor also being configured to add the first value of fluid flow 28 and the flow tracking value 30 to generate a second value 22 of fluid flow,
the processor also being configured to write a control or regulation signal as a function of the generated second value 22 of fluid flow to the output channel.

The instant disclosure also teaches a control device for controlling pressure in at least a space 2 of a structure 1, the structure 1 comprising a combustion appliance 3 with a combustion indicator operable to indicate operation of the combustion appliance 3, at least a first conduit 8; 12 with a flow meter 20, 27, 16, 25; 19, 23, 15, 21 operable to indicate fluid flow through the at least a first conduit 8; 12 and at least a second conduit 12; 8 with a fluid mover 15, 21; 16, 25 operable to control or to regulate fluid flow through the at least a second conduit 12; 8, each conduit 8, 12 being in fluid communication with the at least a space 2, the control device comprising:
- a first input channel for reading a first value 28 of fluid flow through the at least a first conduit 8; 12 from the flow meter 20, 27, 16, 25; 19, 23, 15, 21,
- a second input channel for reading from the combustion indicator a combustion indication signal 34 indicative of whether the combustion appliance 3 is in operation,
- a third input channel for reading a pressure mode signal 32 indicative of a target value of a pressure in the at least a space 2,
- a fourth input channel for reading a high pressure signal 33 indicative of a request for a high pressure in the at least a space 2,
- an output channel for controlling or regulating the fluid mover 15, 21; 16, 25 arranged in the at least a second conduit 12; 8,
- a processor configured to determine a flow tracking value 30 as a function of the pressure mode signal 32, if the combustion indication signal 34 indicates the combustion appliance 3 is not in operation,
- the processor also being configured to determine a flow tracking value 30 as a function of the high pressure signal 33, if the combustion indication signal 34 indicates the combustion appliance 3 is in operation,
- the processor also being configured to add the first value of fluid flow 28 and the flow tracking value 30 to generate a second value 22 of fluid flow,
the processor also being configured to the generated second value 22 of fluid flow to the output channel.

The instant disclosure also teaches the aforementioned control device, wherein the processor is configured to disable the third input channel, if the combustion indication signal 34 indicates the combustion appliance 3 is in operation.

The instant disclosure also teaches a structure 1 such as a commercial, residential, and / or industrial building or facility with an aforementioned control device.

The instant disclosure also teaches a structure 1 such as a commercial, residential, and / or industrial building or facility with an aforementioned control device, the structure 1 comprising a combustion appliance 3 with a combustion indicator operable to indicate operation of the combustion appliance 3, at least a first conduit 8; 12 with a flow meter 20, 27, 16, 25; 19, 23, 15, 21 operable to indicate fluid flow through the at least a first conduit 8; 12 and at least a second conduit 12; 8 with a fluid mover 15, 21; 16, 25 operable to control or to regulate fluid flow through the at least a second conduit 12; 8, each conduit 8, 12 being in fluid communication with the at least a space 2, the structure also comprising a suitable bus system,
wherein the control device connects to the flow meter 20, 27, 16, 25; 19, 23, 15, 21 through the suitable bus system, and wherein the control device connects to the fluid mover 15, 21; 16, 25 through the suitable bus system, and wherein the control device connects to the combustion indicator through the suitable bus system.

Any steps of a method according to the present application may be embodied in hardware, in a software module executed by a processor, in a cloud computing arrangement, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing from the scope of the invention as defined by the following claims. It should also be understood that the invention is not restricted to the illustrated embodiments and that various modifications can be made within the scope of the following claims.

### Reference numerals

1 structure (building)
2 space (room)
3 combustion appliance (fireplace)
4 conduit (chimney)
5 range hood (kitchen hood, fume hood)
6 fluid mover
7 exhaust conduit
8 main exhaust conduit
9 inlet of main exhaust conduit
10 T-intersection between conduits 7 and 8
11 outlet of main exhaust conduit
12 intake conduit
13 outlet of intake conduit 12
14 inlet of intake conduit 12
15, 16 fluid movers
17, 18 control terminal for fluid movers
19, 20 flow measurement devices
21 control module for conduit 8
22 set point input for control module 21
23 (optional) signal processing module
24 actual value input for control module 21
25 control module for intake conduit 12
26 set point input for control module 25
27 (optional) signal processing module
28 actual value input for control module 25
29 calculation unit
30 flow tracking input for calculation unit 29
31 configuration unit
32 pressure mode input for configuration unit 31
33 decrease blower speed input for configuration unit 31
34 combustion appliance input for configuration unit 31
35 range hood compensation input for configuration unit 31

## Claims

1. A method for controlling pressure in at least a space (2) of a structure (1), the structure (1) comprising a combustion appliance (3) with a combustion indicator operable to indicate operation of the combustion appliance (3), at least a first conduit (8; 12) with a flow meter (20, 27, 16, 25; 19, 23, 15, 21) operable to indicate fluid flow through the at least a first conduit (8; 12) and at least a second conduit (12; 8) with a fluid mover (15, 21; 16, 25) operable to control or to regulate fluid flow through the at least a second conduit (12; 8), each conduit (8, 12) being in fluid communication with the at least a space (2),
the method comprising the steps of:
- reading a first value (28) of fluid flow through the at least a first conduit (8; 12) from the flow meter (20, 27, 16, 25; 19, 23, 15, 21),
- reading from the combustion indicator a combustion indication signal (34) indicative of whether the combustion appliance (3) is in operation,
- reading a pressure mode signal (32) indicative of a target value of a pressure in the at least a space (2) and determining a flow tracking value (30) as a function of the pressure mode signal (32), if the combustion indication signal (34) indicates the combustion appliance (3) is not in operation,
- reading a high pressure signal (33) indicative of a request for a high pressure in the at least a space (2) and determining a flow tracking value (30) as a function of the high pressure signal (33), if the combustion indication signal (34) indicates the combustion appliance (3) is in operation,
- adding the first value of fluid flow (28) and the flow tracking value (30) to generate a second value (22) of fluid flow,
- controlling or regulating fluid flow through the at least a second conduit (12; 8) via the fluid mover (15, 21; 16, 25) based on the generated second value (22) of fluid flow.

2. The method according to claim 1, wherein the structure (1) additionally comprises a range hood (6) with a flow indicator operable to indicate operation of the range hood (6), the method further comprising the steps of:
- reading from the flow indicator of the range hood (6) a range hood signal (35) indicative of whether the range hood (6) is in operation,
- generating a third value of fluid flow indicative of fluid flow through the range hood (6) from the range hood signal (35),
- lowering the flow tracking value (30) by the generated third value of fluid flow.

3. The method according to claim 1, wherein the structure (1) additionally comprises a range hood (6) with a flow meter operable to indicate fluid flow through the range hood (6), the method further comprising the steps of:
- reading from the flow meter of the range hood (6) a fourth value of fluid flow (35) indicative of fluid flow through the range hood (6),
- lowering the flow tracking value (30) by the fourth value of fluid flow obtained from the flow meter of the range hood (6).

4. The method according to claim 2 or claim 3, the method comprising the step of
- determining the flow tracking value (30) exclusively as a function of the value of fluid flow indicative of fluid flow through the range hood (6) and of the high pressure signal (33) indicative of a request for high pressure in the at least a space (2), if the combustion indication signal (34) indicates the combustion appliance (3) is in operation.

5. The method according to any of the claims 1 to 4, the method comprising the step of
- disabling a pressure mode signal (32) indicative of a target value of a pressure in the at least a space (2) if the combustion indication signal (34) indicates the combustion appliance (3) is in operation.

6. The method according to any of the claims 1 to 5, the method comprising the step of
- reading a pressure mode signal (32) indicative of a target value of a pressure in the at least a space (2) and determining a flow tracking value (30) as a function of the pressure mode signal (32), if the combustion indication signal (34) indicates the combustion appliance (3) is not in operation,
- wherein determining the flow tracking value (30) involves mapping a pressure mode signal (32) to a flow tracking value (30) via a lookup table.

7. The method according to any of the claims 1 to 5, the method comprising the step of
- reading a pressure mode signal (32) indicative of a target value of a pressure in the at least a space (2) and determining a flow tracking value (30) as a function of the pressure mode signal (32), if the combustion indication signal (34) indicates the combustion appliance (3) is not in operation,
- wherein determining the flow tracking value (30) involves mapping a pressure mode signal (32) to a flow tracking value (30) via a linear relationship.

8. The method according to claim 2, the method comprising the step of
- generating a third value of fluid flow indicative of fluid flow through the range hood (6) from the range hood signal (35),
- wherein generating the third value of fluid flow indicative of fluid flow through the range hood (6) involves mapping a range hood signal (35) to a value of fluid flow via a lookup table.

9. The method according to claim 2, the method comprising the step of
- generating a third value of fluid flow indicative of fluid flow through the range hood (6) from the range hood signal (35),
- wherein generating the third value of fluid flow indicative of fluid flow through the range hood (6) involves mapping a range hood signal (35) to a value of fluid flow via a linear relationship.

10. The method according any of the claims 1 to 9, wherein a negative flow tracking value (30) indicates a high pressure inside the structure (2).

11. The method according any of the claims 1 to 9, wherein a positive flow tracking value (30) indicates a high pressure inside the structure (2).

12. A non-transitory, tangible computer readable medium having instructions executable by a processor for performing the method according to any of the claims 1 to 11 when said instructions are executed.

13. A control device for controlling pressure in at least a space (2) of a structure (1), the structure (1) comprising a combustion appliance (3) with a combustion indicator operable to indicate operation of the combustion appliance (3), at least a first conduit (8; 12) with a flow meter (20, 27, 16, 25; 19, 23, 15, 21) operable to indicate fluid flow through the at least a first conduit (8; 12) and at least a second conduit (12; 8) with a fluid mover (15, 21; 16, 25) operable to control or to regulate fluid flow through the at least a second conduit (12; 8), each conduit (8, 12) being in fluid communication with the at least a space (2),
the control device comprising:
- a first input channel for reading a first value (28) of fluid flow through the at least a first conduit (8; 12) from the flow meter (20, 27, 16, 25; 19, 23, 15, 21),
- a second input channel for reading from the combustion indicator a combustion indication signal (34) indicative of whether the combustion appliance (3) is in operation,
- a third input channel for reading a pressure mode signal (32) indicative of a target value of a pressure in the at least a space (2),
- a fourth input channel for reading a high pressure signal (33) indicative of a request for a high pressure in the at least a space (2),
- an output channel for controlling or regulating the fluid mover (15, 21; 16, 25) arranged in the at least a second conduit (12; 8),
- a processor configured to determine a flow tracking value (30) as a function of the pressure mode signal (32), if the combustion indication signal (34) indicates the combustion appliance (3) is not in operation,
- the processor also being configured to determine a flow tracking value (30) as a function of the high pressure signal (33), if the combustion indication signal (34) indicates the combustion appliance (3) is in operation,
- the processor also being configured to add the first value of fluid flow (28) and the flow tracking value (30) to generate a second value (22) of fluid flow,
- the processor also being configured to write a control or regulation signal as a function of the generated second value (22) of fluid flow to the output channel.

14. The control device according to claim 13, wherein the processor is configured to disable the third input channel, if the combustion indication signal (34) indicates the combustion appliance (3) is in operation.

15. A structure (1) with a control device according to any of the claims 12 to 14.

## Patentansprüche

1. Verfahren zum Steuern des Drucks in zumindest einem Raum (2) eines Gebäudes (1), wobei das Gebäude (1) Folgendes umfasst: eine Verbrennungsvorrichtung (3) mit einem Verbrennungsanzeiger, der zum Anzeigen eines Betriebs der Verbrennungsvorrichtung (3) dient, zumindest eine erste Leitung (8; 12) mit einem Durchflussmesser (20, 27, 16, 25; 19, 23, 15, 21), der zum Anzeigen eines Fluiddurchflusses durch die zumindest eine erste Leitung (8; 12) dient, und zumindest eine zweite Leitung (12; 8) mit einer Fluidbewegungsvorrichtung (15, 21; 16, 25), die zum Steuern oder Regeln eines Fluiddurchflusses durch die zumindest eine zweite Leitung (12; 8) dient, wobei jede Leitung (8, 12) mit zumindest einem Raum (2) in Fluidverbindung steht,
wobei das Verfahren folgende Schritte umfasst:
- Auslesen eines ersten Werts (28) für den Fluiddurchfluss durch die zumindest eine erste Leitung (8; 12) an dem Durchflussmesser (20, 27, 16, 25; 19, 23, 15, 21),
- Auslesen eines Verbrennungsanzeigesignals (34), das angibt, ob die Verbrennungsvorrichtung (3) in Betrieb ist, an dem Verbrennungsanzeiger,
- Auslesen eines Druckmodussignals (32), das einen Sollwert für einen Druck in dem zumindest einen Raum (2) angibt, und Bestimmen eines Durchflussnachverfolgungswerts (30) in Abhängigkeit von dem Druckmodussignal (32), wenn das Verbrennungsanzeigesignal (34) angibt, dass die Verbrennungsvorrichtung (3) nicht in Betrieb ist,
- Auslesen eines Hochdrucksignals (33), das eine Forderung nach einem hohen Druck in dem zumindest einen Raum (2) angibt, und Bestimmen eines Strömungsnachverfolgungswerts (30) in Abhängigkeit von dem Hochdrucksignal (33), wenn das Verbrennungsanzeigesignal (34) angibt, dass die Verbrennungsvorrichtung (3) in Betrieb ist,
- Addieren des ersten Werts für den Fluiddurchfluss (28) und des Durchflussnachverfolgungswerts (30) zum Erzeugen eines zweiten Werts (22) für den Fluiddurchfluss,
- Steuern oder Regeln des Fluiddurchflusses durch die zumindest eine zweite Leitung (12; 8) über die Fluidbewegungsvorrichtung (15, 21; 16, 25) auf der Grundlage des erzeugten zweiten Werts (22) für den Fluiddurchfluss.

2. Verfahren nach Anspruch 1, wobei das Gebäude (1) zusätzlich eine Dunstabzugshaube (6) mit einem Durchflussanzeiger umfasst, der dazu dient anzuzeigen, dass die Dunstabzugshaube (6) in Betrieb ist, wobei das Verfahren ferner folgende Schritte umfasst:
- Auslesen eines Dunstabzugshaubensignals (35) von dem Durchflussanzeiger der Dunstabzugshaube (6), das angibt, ob die Dunstabzugshaube (6) in Betrieb ist,
- Erzeugen eines dritten Werts für den Fluiddurchfluss, der den Fluiddurchfluss durch die Dunstabzugshaube (6) angibt, aus dem Dunstabzugshaubensignal (35),
- Verringern des Durchflussnachverfolgungswerts (30) um den erzeugten dritten Wert für den Fluiddurchfluss.

3. Verfahren nach Anspruch 1, wobei das Gebäude (1) zusätzlich eine Dunstabzugshaube (6) mit einem Durchflussmesser umfasst, der dazu dient, einen Fluiddurchfluss durch die Dunstabzugshaube (6) anzuzeigen, wobei das Verfahren ferner folgende Schritte umfasst:
- Auslesen eines vierten Werts für den Fluiddurchfluss (35), der den Fluiddurchfluss durch die Dunstabzugshaube (6) angibt, am Durchflussmesser der Dunstabzugshaube (6),
- Verringern des Durchflussnachverfolgungswerts (30) um den vierten Wert für den Fluiddurchfluss vom Durchflussmesser der Dunstabzugshaube (6).

4. Verfahren nach Anspruch 2 oder 3, das folgenden Schritt umfasst:
- Bestimmen des Durchflussnachverfolgungswerts (30) ausschließlich in Abhängigkeit von dem Wert für den Fluiddurchfluss, der den Fluiddurchfluss durch die Dunstabzugshaube (6) angibt, und von dem Hochdrucksignal (33), das eine Forderung nach einem hohen Druck in dem zumindest einen Raum (2) angibt, wenn das Verbrennungsanzeigesignal (34) angibt, dass die Verbrennungsvorrichtung (3) in Betrieb ist.

5. Verfahren nach einem der Ansprüche 1 bis 4, das folgenden Schritt umfasst:
- Deaktivieren eines Druckmodussignals (32), das einen Sollwert für einen Druck in dem zumindest einen Raum (2) angibt, wenn das Verbrennungsanzeigesignal (34) angibt, dass die Verbrennungsvorrichtung (3) in Betrieb ist.

6. Verfahren nach einem der Ansprüche 1 bis 5, das folgenden Schritt umfasst:
- Auslesen eines Druckmodussignals (32), das einen Sollwert für einen Druck in dem zumindest einen Raum (2) angibt, und Bestimmen eines Durchflussnachverfolgungswerts (30) in Abhängigkeit von dem Druckmodussignal (32), wenn das Verbrennungsanzeigesignal (34) angibt, dass die Verbrennungsvorrichtung (3) nicht in Betrieb ist,
- wobei das Bestimmen des Durchflussnachverfolgungswerts (30) ein Zuordnen eines Druckmodussignals (32) zu einem Durchflussnachverfolgungswert (30) über eine Nachschlagetabelle umfasst.

7. Verfahren nach einem der Ansprüche 1 bis 5, das folgenden Schritt umfasst:
- Auslesen eines Druckmodussignals (32), das einen Sollwert für einen Druck in dem zumindest einen Raum (2) angibt, und Bestimmen eines Durchflussnachverfolgungswerts (30) in Abhängigkeit von dem Druckmodussignal (32), wenn das Verbrennungsanzeigesignal (34) angibt, dass die Verbrennungsvorrichtung (3) nicht in Betrieb ist,
- wobei das Bestimmen des Durchflussnachverfolgungswerts (30) ein Zuordnen eines Druckmodussignals (32) zu einem Durchflussnachverfolgungswert (30) über eine lineare Beziehung umfasst.

8. Verfahren nach Anspruch 2, das folgenden Schritt umfasst:
- Erzeugen eines dritten Werts für den Fluiddurchfluss, der den Fluiddurchfluss durch die Dunstabzugshaube (6) angibt, aus dem Dunstabzugshaubensignal (35),
- wobei das Erzeugen des dritten Werts für den Fluiddurchfluss, der den Fluiddurchfluss durch die Dunstabzugshaube (6) angibt, ein Zuordnen eines Dunstabzugshaubensignals (35) zu einem Wert für den Fluiddurchfluss über eine Nachschlagetabelle umfasst.

9. Verfahren nach Anspruch 2, das folgenden Schritt umfasst:
- Erzeugen eines dritten Werts für den Fluiddurchfluss, der den Fluiddurchfluss durch die Dunstabzugshaube (6) angibt, aus dem Dunstabzugshaubensignal (35),
- wobei das Erzeugen des dritten Werts für den Fluiddurchfluss, der den Fluiddurchfluss durch die Dunstabzugshaube (6) angibt, ein Zuordnen eines Dunstabzugshaubensignals (35) zu einem Wert für den Fluiddurchfluss über eine lineare Beziehung umfasst.

10. Verfahren nach einem der Ansprüche 1 bis 9, wobei ein negativer Durchflussnachverfolgungswert (30) einen hohen Druck in dem Gebäude (2) angibt.

11. Verfahren nach einem der Ansprüche 1 bis 9, wobei ein positiver Durchflussnachverfolgungswert (30) einen hohen Druck in dem Gebäude (2) angibt.

12. Nichtflüchtiges, physisches, computerlesbares Medium mit von einem Prozessor ausführbaren Anweisungen zum Durchführen des Verfahrens nach einem der Ansprüche 1 bis 11, wenn die Anweisungen ausgeführt werden.

13. Steuereinrichtung zum Steuern des Drucks in zumindest einem Raum (2) eines Gebäudes (1), wobei das Gebäude (1) Folgendes umfasst: eine Verbrennungsvorrichtung (3) mit einem Verbrennungsanzeiger, der zum Anzeigen eines Betriebs der Verbrennungsvorrichtung (3) dient, zumindest eine erste Leitung (8; 12) mit einem Durchflussmesser (20, 27, 16, 25; 19, 23, 15, 21), der zum Anzeigen eines Fluiddurchflusses durch die zumindest eine erste Leitung (8; 12) dient, und zumindest eine zweite Leitung (12; 8) mit einer Fluidbewegungsvorrichtung (15, 21; 16, 25), die zum Steuern oder Regeln eines Fluiddurchflusses durch die zumindest eine zweite Leitung (12; 8) dient, wobei jede Leitung (8, 12) mit dem zumindest einen Raum (2) in Fluidverbindung steht,
wobei die Steuereinrichtung Folgendes umfasst:
- einen ersten Eingabekanal zum Auslesen eines ersten Werts (28) für den Fluiddurchfluss durch die zumindest eine erste Leitung (8; 12) an dem Durchflussmesser (20, 27, 16, 25; 19, 23, 15, 21),
- einen zweiten Eingabekanal zum Auslesen eines Verbrennungsanzeigesignals (34), das angibt, ob die Verbrennungsvorrichtung (3) in Betrieb ist, an dem Verbrennungsanzeiger,
- einen dritten Eingabekanal zum Auslesen eines Druckmodussignals (32), das einen Sollwert für einen Druck in dem zumindest einen Raum (2) angibt,
- einen vierten Eingabekanal zum Auslesen eines Hochdrucksignals (33), das eine Forderung nach einem hohen Druck in dem zumindest einen Raum (2) angibt,
- einen Ausgabekanal zum Steuern oder Regeln der Fluidbewegungsvorrichtung (15, 21; 16, 25), die in der zumindest einen zweiten Leitung (12; 8) angeordnet ist,
- einen Prozessor, der so konfiguriert ist, dass er in Abhängigkeit von dem Druckmodussignal (32) einen Durchflussnachverfolgungswert (30) bestimmt, wenn das Verbrennungsanzeigesignal (34) angibt, dass die Verbrennungsvorrichtung (3) nicht in Betrieb ist,
- wobei der Prozessor auch so konfiguriert ist, dass er in Abhängigkeit von dem Hochdrucksignal (33) einen Durchflussnachverfolgungswert (30) bestimmt, wenn das Verbrennungsanzeigesignal (34) angibt, dass die Verbrennungsvorrichtung (3) in Betrieb ist,
- wobei der Prozessor auch so konfiguriert ist, dass er zum Erzeugen eines zweiten Werts (22) für den Fluiddurchfluss den ersten Wert für den Fluiddurchfluss (28) und den Durchflussnachverfolgungswert (30) addiert,
- wobei der Prozessor auch so konfiguriert ist, dass er in Abhängigkeit von dem erzeugten zweiten Wert (22) für den Fluiddurchfluss zum Ausgabekanal ein Steuer- oder Regelsignal schreibt.

14. Steuereinrichtung nach Anspruch 13, wobei der Prozessor so konfiguriert ist, dass er den dritten Eingabekanal deaktiviert, wenn das Verbrennungsanzeigesignal (34) angibt, dass die Verbrennungsvorrichtung (3) in Betrieb ist.

15. Gebäude (1) mit einer Steuereinrichtung nach einem der Ansprüche 12 bis 14.

## Revendications

1. Méthode pour commander la pression dans au moins un espace (2) d'une structure (1), la structure (1) comprenant un appareil de combustion (3) avec un indicateur de combustion utilisable pour indiquer le fonctionnement de l'appareil de combustion (3), au moins un premier conduit (8 ; 12) avec un débitmètre (20, 27, 16, 25 ; 19, 23, 15, 21) utilisable pour indiquer le débit de fluide à travers l'au moins un premier conduit (8 ; 12) et au moins un deuxième conduit (12 ; 8) avec un dispositif de déplacement de fluide (15, 21 ; 16, 25) utilisable pour commander ou pour réguler le débit de fluide à travers l'au moins un deuxième conduit (12 ; 8), chaque conduit (8, 12) étant en communication fluidique avec l'au moins un espace (2),
la méthode comprenant les étapes consistant à :
- lire une première valeur (28) de débit de fluide à travers l'au moins un premier conduit (8 ; 12) à partir du débitmètre (20, 27, 16, 25 ; 19, 23, 15, 21),
- lire à partir de l'indicateur de combustion un signal d'indication de combustion (34) indiquant si l'appareil de combustion (3) est en fonctionnement,
- lire un signal de mode de pression (32) indiquant une valeur cible d'une pression dans l'au moins un espace (2) et déterminer une valeur de suivi de débit (30) en fonction du signal de mode de pression (32), si le signal d'indication de combustion (34) indique que l'appareil de combustion (3) n'est pas en fonctionnement,
- lire un signal de haute pression (33) indiquant une requête d'une haute pression dans l'au moins un espace (2) et déterminer une valeur de suivi de débit (30) en fonction du signal de haute pression (33), si le signal d'indication de combustion (34) indique que l'appareil de combustion (3) est en fonctionnement,
- ajouter la première valeur de débit de fluide (28) et la valeur de suivi de débit (30) afin d'engendrer une deuxième valeur (22) de débit de fluide,
- commander ou réguler le débit de fluide à travers l'au moins un deuxième conduit (12 ; 8) par l'intermédiaire du dispositif de déplacement de fluide (15, 21 ; 16, 25) sur la base de la deuxième valeur engendrée (22) de débit de fluide.

2. Méthode selon la revendication 1, dans laquelle la structure (1) comprend de plus une hotte aspirante (6) avec un indicateur de débit utilisable pour indiquer le fonctionnement de la hotte aspirante (6), la méthode comprenant en outre les étapes consistant à :
- lire à partir de l'indicateur de débit de la hotte aspirante (6) un signal de hotte aspirante (35) indiquant si la hotte aspirante (6) est en fonctionnement,
- engendrer une troisième valeur de débit de fluide indiquant le débit de fluide à travers la hotte aspirante (6) à partir du signal de hotte aspirante (35),
- abaisser la valeur de suivi de débit (30) de la troisième valeur engendrée de débit de fluide.

3. Méthode selon la revendication 1, dans laquelle la structure (1) comprend de plus une hotte aspirante (6) avec un débitmètre utilisable pour indiquer le débit de fluide à travers la hotte aspirante (6), la méthode comprenant en outre les étapes consistant à :
- lire à partir du débitmètre de la hotte aspirante (6) une quatrième valeur de débit de fluide (35) indiquant le débit de fluide à travers la hotte aspirante (6),
- abaisser la valeur de suivi de débit (30) de la quatrième valeur de débit de fluide obtenue à partir du débitmètre de la hotte aspirante (6).

4. Méthode selon la revendication 2 ou la revendication 3, la méthode comprenant l'étape consistant à
- déterminer la valeur de suivi de débit (30) exclusivement en fonction de la valeur de débit de fluide indiquant le débit de fluide à travers la hotte aspirante (6) et du signal de haute pression (33) indiquant une requête d'une haute pression dans l'au moins un espace (2), si le signal d'indication de combustion (34) indique que l'appareil de combustion (3) est en fonctionnement.

5. Méthode selon l'une quelconque des revendications 1 à 4, la méthode comprenant l'étape consistant à
- désactiver un signal de mode de pression (32) indiquant une valeur cible d'une pression dans l'au moins un espace (2) si le signal d'indication de combustion (34) indique que l'appareil de combustion (3) est en fonctionnement.

6. Méthode selon l'une quelconque des revendications 1 à 5, la méthode comprenant l'étape consistant à
- lire un signal de mode de pression (32) indiquant une valeur cible d'une pression dans l'au moins un espace (2) et déterminer une valeur de suivi de débit (30) en fonction du signal de mode de pression (32), si le signal d'indication de combustion (34) indique que l'appareil de combustion (3) n'est pas en fonctionnement,
- dans laquelle le fait de déterminer la valeur de suivi de débit (30) implique la mise en correspondance d'un signal de mode de pression (32) avec une valeur de suivi de débit (30) par l'intermédiaire d'une table de recherche.

7. Méthode selon l'une quelconque des revendications 1 à 5, la méthode comprenant l'étape consistant à
- lire un signal de mode de pression (32) indiquant une valeur cible d'une pression dans l'au moins un espace (2) et déterminer une valeur de suivi de débit (30) en fonction du signal de mode de pression (32), si le signal d'indication de combustion (34) indique que l'appareil de combustion (3) n'est pas en fonctionnement,
- dans laquelle le fait de déterminer la valeur de suivi de débit (30) implique la mise en correspondance d'un signal de mode de pression (32) avec une valeur de suivi de débit (30) par l'intermédiaire d'une relation linéaire.

8. Méthode selon la revendication 2, la méthode comprenant l'étape consistant à
- engendrer une troisième valeur de débit de fluide indiquant le débit de fluide à travers la hotte aspirante (6) à partir du signal de hotte aspirante (35),
- dans laquelle le fait d'engendrer la troisième valeur de débit de fluide indiquant le débit de fluide à travers la hotte aspirante (6) implique la mise en correspondance d'un signal de hotte aspirante (35) avec une valeur de débit de fluide par l'intermédiaire d'une table de recherche.

9. Méthode selon la revendication 2, la méthode comprenant l'étape consistant à
- engendrer une troisième valeur de débit de fluide indiquant le débit de fluide à travers la hotte aspirante (6) à partir du signal de hotte aspirante (35),
- dans laquelle le fait d'engendrer la troisième valeur de débit de fluide indiquant le débit de fluide à travers la hotte aspirante (6) implique la mise en correspondance d'un signal de hotte aspirante (35) avec une valeur de débit de fluide par l'intermédiaire d'une relation linéaire.

10. Méthode selon l'une quelconque des revendications 1 à 9, dans laquelle une valeur de suivi de débit négative (30) indique une haute pression à l'intérieur de la structure (2).

11. Méthode selon l'une quelconque des revendications 1 à 9, dans laquelle une valeur de suivi de débit positive (30) indique une haute pression à l'intérieur de la structure (2).

12. Support tangible lisible par ordinateur non transitoire présentant des instructions exécutables par un processeur pour mettre en oeuvre la méthode selon l'une quelconque des revendications 1 à 11 lorsque lesdites instructions sont exécutées.

13. Dispositif de commande pour commander la pression dans au moins un espace (2) d'une structure (1), la structure (1) comprenant un appareil de combustion (3) avec un indicateur de combustion utilisable pour indiquer le fonctionnement de l'appareil de combustion (3), au moins un premier conduit (8 ; 12) avec un débitmètre (20, 27, 16, 25 ; 19, 23, 15, 21) utilisable pour indiquer le débit de fluide à travers l'au moins un premier conduit (8 ; 12) et au moins un deuxième conduit (12 ; 8) avec un dispositif de déplacement de fluide (15, 21 ; 16, 25) utilisable pour commander ou pour réguler le débit de fluide à travers l'au moins un deuxième conduit (12 ; 8), chaque conduit (8, 12) étant en communication fluidique avec l'au moins un espace (2),
le dispositif de commande comprenant :
- un premier canal d'entrée pour lire une première valeur (28) de débit de fluide à travers l'au moins un premier conduit (8 ; 12) à partir du débitmètre (20, 27, 16, 25 ; 19, 23, 15, 21),
- un deuxième canal d'entrée pour lire à partir de l'indicateur de combustion un signal d'indication de combustion (34) indiquant si l'appareil de combustion (3) est en fonctionnement,
- un troisième canal d'entrée pour lire un signal de mode de pression (32) indiquant une valeur cible d'une pression dans l'au moins un espace (2),
- un quatrième canal d'entrée pour lire un signal de haute pression (33) indiquant une requête d'une haute pression dans l'au moins un espace (2),
- un canal de sortie pour commander ou réguler le dispositif de déplacement de fluide (15, 21 ; 16, 25) agencé dans l'au moins un deuxième conduit (12 ; 8),
- un processeur configuré pour déterminer une valeur de suivi de débit (30) en fonction du signal de mode de pression (32), si le signal d'indication de combustion (34) indique que l'appareil de combustion (3) n'est pas en fonctionnement,
- le processeur étant également configuré pour déterminer une valeur de suivi de débit (30) en fonction du signal de haute pression (33), si le signal d'indication de combustion (34) indique que l'appareil de combustion (3) est en fonctionnement,
- le processeur étant également configuré pour ajouter la première valeur de débit de fluide (28) et la valeur de suivi de débit (30) afin d'engendrer une deuxième valeur (22) de débit de fluide,
- le processeur étant également configuré pour écrire un signal de commande ou de régulation en fonction de la deuxième valeur engendrée (22) de débit de fluide vers le canal de sortie.

14. Dispositif de commande selon la revendication 13, dans lequel le processeur est configuré pour désactiver le troisième canal d'entrée, si le signal d'indication de combustion (34) indique que l'appareil de combustion (3) est en fonctionnement.

15. Structure (1) avec un dispositif de commande selon l'une quelconque des revendications 12 à 14.
